**Europäisches Patentamt**

**European Patent Office**

**Office européen des brevets**

(11) Numéro de publication: **0 010 505**

**A1**

## (12) DEMANDE DE BREVET EUROPEEN

(21) Numéro de dépôt: **79400775.7**

(22) Date de dépôt: **19.10.79**

(51) Int. Cl.³: **G 02 B 7/26**

(30) Priorité: **23.10.78 FR 7830104**

(43) Date de publication de la demande:
**30.04.80 Bulletin 80/9**

(84) Etats Contractants Désignés:
**BE DE GB IT NL**

(71) Demandeur: **SOURIAU & Cie (S.A.)**
**9/13, rue du Général Galliéni**
**F-92103 Boulogne-Billancourt(FR)**

(72) Inventeur: **Prunier, Jean-Claude**
**16Bis, Avenue Foch Résidence Les Pierges F2**
**F-95220 Herblay(FR)**

(74) Mandataire: **Berogin, Francis**
**Société S.E.D.I.C. 21, rue Molière**
**F-92120 Montrouge(FR)**

(54) **Connecteur pour fibres optiques et dispositif de montage des fibres sur des embouts directement utilisables sur connecteur.**

(57) Le connecteur comprend une embase 1, renfermant une équerre 7, et sur laquelle peuvent se monter deux fiches comprenant chacune un embout 23 muni d'un canon 35 de section carrée ou rectangulaire à bords chanfreinés, présentant un perçage longitudinal 36, les canons 35 étant, à l'assemblage des fiches sur l'embase 1, positionnés chacun contre l'équerre 7 et venant en regard l'un de l'autre, de sorte que les extrémités des fibres optiques, retenues chacune par collage dans une fente 37 pratiquée à l'extrémité de chaque canon 35 et débouchant dans le perçage longitudinal 36, viennent en bout l'une de l'autre.

Application à la connexion de fibres optiques.

1

## CONNECTEUR POUR FIBRES OPTIQUES ET DISPOSITIF DE MONTAGE DES FIBRES SUR DES EMBOUTS DIRECTEMENT UTILISABLES SUR CONNECTEUR

La présente invention a pour objet un connecteur pour fibres optiques et un dispositif de montage des fibres sur des embouts directement utilisables sur connecteur, qui constituent des perfectionnements de l'objet de la demande de brevet français 77/18675 au nom du CENTRE NATIONAL D'ETUDES DES TELECOMMUNICATIONS.

Il est déjà connu des appareillages de montage, sur câble de transmission par fibres optiques, de pièces permettant des raccordements interchangeables, faisant intervenir deux surfaces planes, perpendiculaires l'une à l'autre et constituant ainsi des surfaces de référence, contre lesquelles sont appliquées deux pièces-support identiques, de forme parallèlépipédique et présentant une rainure en V, d'axe parallèle aux deux surfaces, au fond de laquelle est maintenue la fibre optique, de sorte que par rapprochement des pièces-support les fibres sont mises bout à bout.

Ces appareillages connus, délicats à usiner, donc coûteux, et de mise en oeuvre difficile, sont demeurés essentiellement des appareillages de laboratoire, et n'ont pas fait l'objet de développements sous forme de connecteurs rapidement et facilement utilisables, notamment sur chantier, et d'un coût de revient raisonnable.

Le problème à la base de la présente invention consiste à concevoir un tel connecteur, ainsi qu'un dispositif de montage des fibres optiques sur des embouts susceptibles d'être directement et rapidement montés et utilisés sur un tel connecteur.

2

A cet effet, le connecteur pour fibres optiques selon l'invention, comprenant une embase, de part et d'autre de laquelle sont susceptibles de se solidariser deux fiches portant chacune l'une des extrémités des fibres optiques à connecter, se caractérise en ce que l'embase présente un corps d'embase de forme générale tubulaire, à l'intérieur duquel est retenue une équerre, et en ce que chaque fiche comprend un embout muni d'un canon de section carrée ou rectangulaire à bords chanfreinés, présentant un perçage longitudinal, les canons étant, à l'assemblage des fiches sur l'embase, positionnés chacun contre l'équerre et venant en regard l'un de l'autre, de sorte que les extrémités des fibres optiques, retenues chacune par collage dans une fente pratiquée à l'extrémité de chaque canon et débouchant dans le perçage axial, viennent en bout l'une de l'autre.

De plus, le positionnement des canons en vis-à-vis l'un de l'autre est facilité par le fait que chacun des canons est appliqué, indépendamment de l'autre, contre l'équerre par des moyens élastiques retenus dans le corps d'embase.

Dans une forme de réalisation avantageuse, permettant un montage bout à bout des canons des embouts avec une pression de contact suffisante pour assurer une bonne transmission du signal lumineux entre les extrémités en vis-à-vis des fibres optiques, chaque canon est porté par une base d'embout, creuse, traversée par la fibre sortant du perçage longitudinal du canon, et par laquelle l'embout est reçu dans un corps de fiche dans lequel il est susceptible de se déplacer axialement à l'encontre de moyens élastiques prenant appui contre des moyens

3

de retenue d'une gaine, entourant la fibre optique, et d'un câble de protection mécanique de la gaine, ces moyens de retenue étant fixés dans le corps de fiche par un écrou serre-câble vissé sur le corps de fiche, à l'une de ses extrémités, l'autre extrémité étant traversée par le canon de l'embout. Enfin, chaque corps de fiche est susceptible d'être positionné, par sa partie recevant la base de l'embout, dans l'une des extrémités du corps d'embase tubulaire, au moyen d'éléments mécaniques empêchant toute rotation du corps de fiche par rapport au corps d'embase, ces derniers étant solidarisés l'un à l'autre par un écrou de connection, et montés de telle sorte que le jeu entre le corps de fiche et le corps d'embase soit inférieur au jeu entre l'embout et le corps de fiche, de sorte que le positionnement des corps de fiche dans le corps d'embase ne perturbe pas le positionnement des canons des embouts, montés en quelque sorte "flottant" dans les corps de fiche, contre l'équerre, et en regard l'un de l'autre, sous l'action des moyens élastiques prévus à cet effet dans le corps d'embase.

De préférence, ces moyens élastiques consistent en deux clips élastiques entourant l'équerre, et présentant des extrémités recourbées, rabattues vers l'intérieur de l'équerre, pour repousser chacun l'un des canons contre l'équerre, selon les deux directions perpendiculaires à l'axe de la fibre.

Les moyens de retenue de la gaine et du câble peuvent comprendre un presse-étoupe, disposé entre deux rondelles, et présentant un perçage central dans lequel est retenu la gaine, les moyens élastiques, à l'encontre desquels l'embout peut se déplacer, prenant appui contre l'une des rondelles, position-

4

née contre un épaulement interne du corps de fiche, et une ferrule sertie sur le câble étant retenue contre l'autre rondelle par l'écrou serre-câble vissé sur le corps de fiche, de même qu'il sera avantageusement prévu un limiteur de course, pour limiter les déplacements axiaux de l'embout dans le corps de fiche, afin de contenir le recul de l'embout dans une plage acceptable dans le corps de fiche, lorsque la fiche est manipulée non montée sur l'embase, pour ne pas surcharger ni faire exagérément flamber la partie de la fibre, reçue dans l'embout, ce qui pourrait provoquer sa cassure ou développer sur elle des microcourbures développant des pertes dans la transmission dites "pertes d'insertion".

Le dispositif selon l'invention, destiné à permettre le montage d'une fibre optique sur un embout reçu dans une fiche de connecteur selon l'invention, se caractérise en ce qu'il comprend un bloc sur lequel ont été rectifiés deux plans perpendiculaires constituant une équerre contre laquelle est appliqué un élément de centrage, dont une face, non au contact de l'équerre, présente une rainure en V, parallèle à l'arête de l'équerre, et au fond de laquelle est maintenue une fibre optique, sortant du canon de l'embout et soumise à l'effet de moyens élastiques tendant à tirer la fibre hors du canon, lequel est appliqué contre l'équerre et contre l'un des côtés de l'élément de centrage, de sorte que par introduction de colle dans la fente d'extrémité du canon, l'extrémité de la fibre est immobilisée en bout du canon, dans une position identique pour tous les canons appliqués contre l'élément de centrage d'un même côté de ce dernier. De plus, une aiguille de pression, montée coulissante sur le bloc et solli-

5

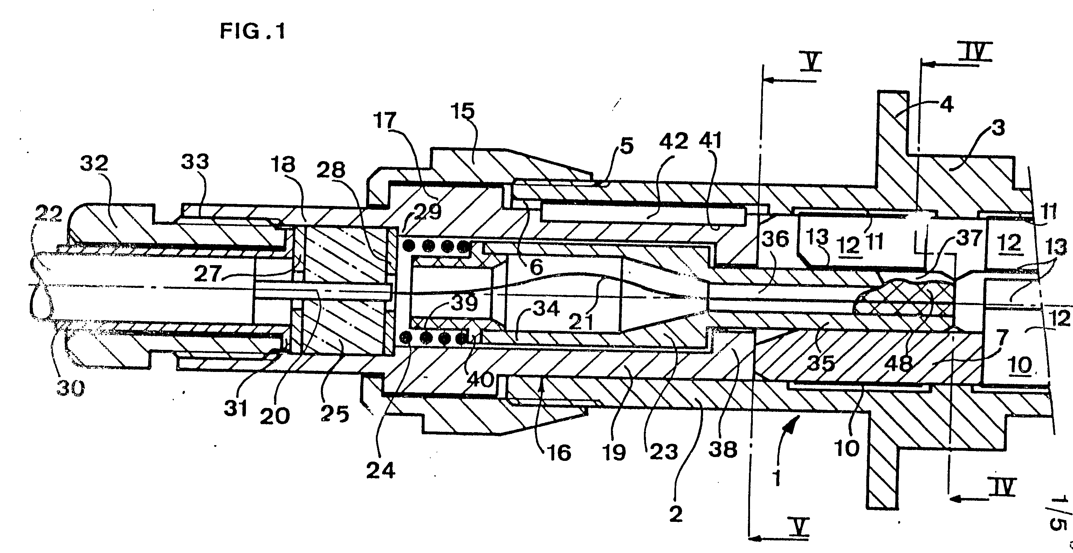

citée élastiquement en direction de la rainure en V de l'élément de centrage, lui-même appliqué contre l'équerre par une cale, maintient la fibre au fond de cette rainure en V, et le canon de l'embout, positionné contre l'un des côtés de l'élément de centrage, est appliqué contre l'équerre par celui des deux bras montés basculants sur le bloc de part et d'autre de l'élément de centrage, qui se trouve du même côté de ce dernier que le canon. Enfin, le bloc est traversé par deux barres de guidage parallèles à l'arête de l'équerre et supportant, d'un côté du bloc, la fiche recevant l'embout considéré, et, de l'autre côté du bloc, un porte-fibre, constitué d'une base présentant une rainure en V, dans le prolongement de celle de l'élément de centrage, sur laquelle peut se rabattre un doigt de blocage de la fibre contre la base, laquelle, montée coulissante sur les guides, est élastiquement écartée du bloc par deux ressorts, montés sur les guides et s'appuyant contre le bloc, et constituant les moyens élastiques tendant à tirer la fibre hors du canon. A l'aide de ce dispositif, et à partir d'embouts apparemment tous identiques, ce qui est vrai à 0,01 mm près, on peut ainsi procéder au montage des fibres à l'extrémité d'embouts qui sont en fait symétriques, par rapport aux plans de référence de l'équerre, et à un micron près, après le collage de la fibre. On obtient ainsi des embouts que l'on peut qualifier d'embouts "gauches" et d'embouts "droits" en se référant à la figure 1, ces embouts étant placés, soit sur le côté "gauche", soit sur le côté "droit" de l'élément de centrage pour le montage de la fibre.

La présente invention sera mieux comprise, à l'aide

6

d'un exemple particulier de réalisation qui sera décrit ci-après, à titre non limitatif, en référence aux figures annexées dans lesquelles :

- la figure 1 représente une vue en coupe axiale d'un connecteur réalisant la connection de deux fibres optiques,

- les figures 2 et 3 représentent des vues en coupe axiale respectivement d'une embase et d'une fiche de connecteur selon la figure 1,

- les figures 4 et 5 représentent des vues selon les coupes IV-IV et V-V de la figure 1,

- et la figure 6 représente une vue en perspective, en partie éclatée, d'une fiche et d'un embout de connecteur selon l'invention, coopérant avec un dispositif de montage d'une fibre optique sur l'embout.

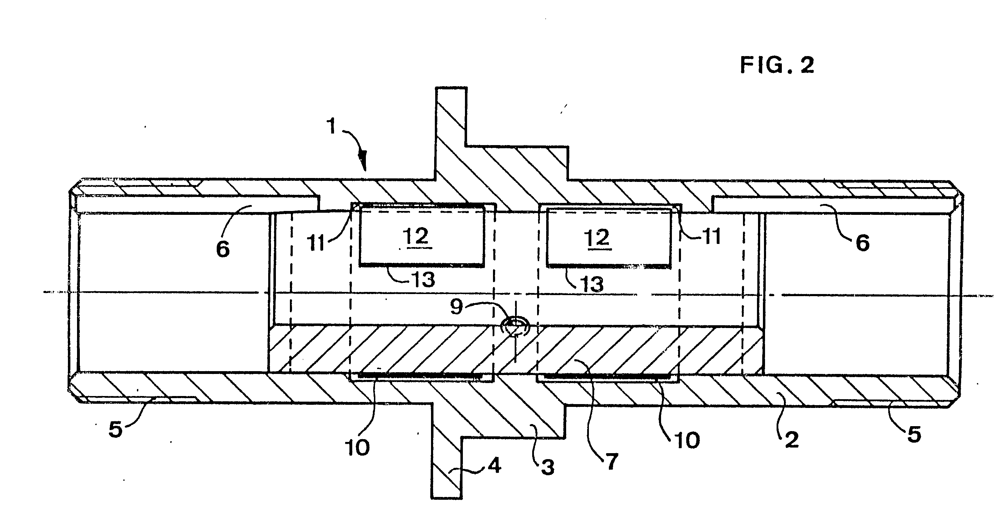

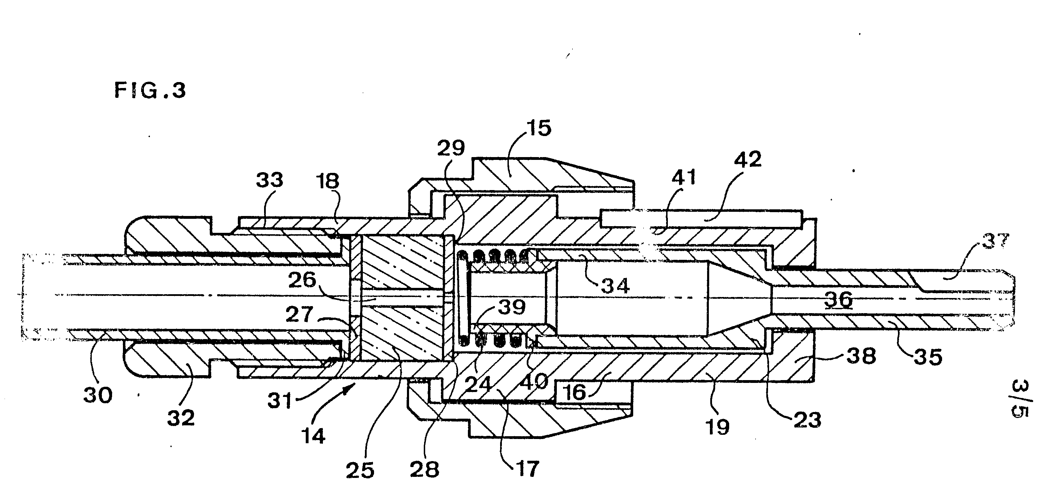

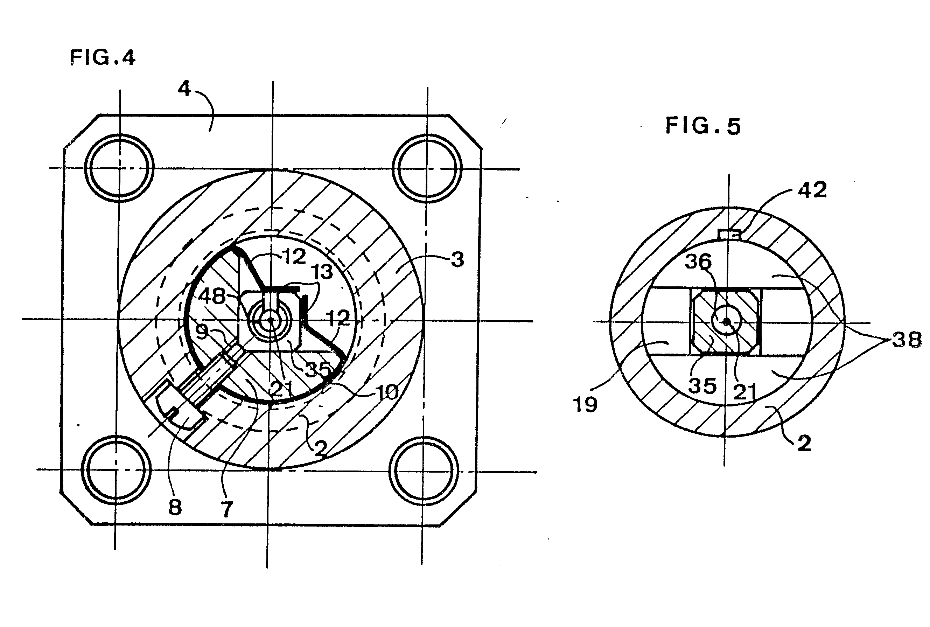

En référence aux figures 1 à 5, le connecteur comprend une embase 1 présentant un corps d'embase 2, de forme générale tubulaire, ainsi qu'un épaulement externe 3 et une bride 4, destinés à permettre la fixation de l'embase 1 sur un support non représenté.

A chacune de ses extrémités, le corps d'embase tubulaire 2 présente, sur sa face externe, un filetage de connection 5, et, sur sa face interne, une rainure longitudinale 6. Une équerre 7 est retenue à l'intérieur du corps d'embase 2 par une vis 8, traversant l'épaulement 3, le corps d'embase 2, et reçue dans un passage fileté 9 pratiqué dans l'équerre 7. L'équerre 7 est entourée de deux clips métalliques élastiques 10 logés dans des chambres 11 usinées à l'intérieur du corps d'embase 2. Chaque clip 10 comporte des extrémités 12 recourbées en forme de talon 13, et les extrémités 12 sont rabattues vers l'intérieur de l'équerre 7. Par chacune de ses extrémités, le corps d'embase tubulaire 2 peut recevoir une fiche 14 portant un écrou de connection 15 qui, en se vissant sur le filetage 5 du corps d'embase 2, assure la fixation de la fiche 14 sur l'embase 1. La fiche 14 comprend un corps de fiche 16, constitué d'un épaulement 17 de retenue de l'écrou de connection 15, de part et d'autre duquel se trouvent deux portions tubulaires 18 et 19, dont l'une 18, est destinée à recevoir des moyens de retenue d'une gaine 20 entourant une fibre optique 21, et d'un câble 22 de protection mécanique de la gaine 20, et dont l'autre 19, est destinée à loger un embout 23 et un ressort 24. Les moyens de retenue de la gaine 20 sont constitués par un presse-étoupe 25 présentant un perçage central 26 et disposé entre deux rondelles 27 et 28, dont l'une 28 est appliquée contre l'épaulement interne 29 du corps de fiche 16. Les moyens de retenue du câble 22 sont constitués par une ferrule 30 à sertir ou sertie autour du câble 22 et dont une extrémité 31 est pincée entre la rondelle 27 et un écrou serre-câble 32 qui se visse sur le filetage 33 interne à l'extrémité de la portion tubulaire 18 du corps de fiche 16. Par le vissage de l'écrou serre-câble 32, on assure simultanément la retenue de la ferrule 30 sertie autour du câble 22 et la compression, entre les rondelles 27 et 28, du presse-étoupe 25 qui enserre et retient la gaine 20. L'embout 23 est constitué d'une base creuse 34, traversée par une partie dénudée de la fibre optique 21, et portant un canon 35 de section carrée ou rectangulaire, à bords chanfreinés, présentant un perçage longitudinal 36 dans lequel débouche une fente d'extrémité 37, l'extrémité de la fibre optique 21 étant reçue dans le perçage longitudinal 36 du canon 35 et étant immobilisée à son extrémité par un bloc de colle 48, préalablement introduit par la fente 37, comme il sera expliqué ci-après. L'embout 23 est monté dans le corps de fiche 16 de telle sorte que la base 34 soit reçue dans la portion tubulaire 19 et que le canon 35 traverse un fond 38 du corps de fiche 16, la base 34 étant susceptible de coulisser dans la portion tubulaire 19 à l'encontre du ressort 24, prenant appui, d'un côté, contre la rondelle 28, et, de l'autre, contre la butée annulaire 40 d'un manchon 39 traversé par la fibre 21, reçu dans l'extrémité libre de la base 34 de l'embout 23, et faisant office de limiteur de course pour les mouvements de recul de l'embout 23 dans le corps de fiche 16, qui, s'ils étaient trop importants, notamment lors des manipulations de la fiche 14 avant la connection sur l'embase 1, conduiraient à des surcharges et à un flambage excessif de la partie de la fibre 21 située dans la base 34, pouvant mener à une cassure de la fibre 21 ou au développement sur la fibre de microcourbures apportant des pertes d'insertion.

Le corps de fiche 16 comporte également, sur sa portion tubulaire 19, un logement 41 pour une clavette 42.

Lorsqu'on assemble sur l'embase 1, deux fiches 14 sur lesquelles on a préalablement monté un embout 23, retenant l'extrémité à connecter d'une fibre 21, ainsi que le ressort 24 et les divers moyens de retenue du câble 22 et de la gaine 20, les portions tubulaires 19 sont introduites dans le corps d'embase tubulaire 2, les clavettes 42 se logeant dans les rainures 6 et empêchant toute rotation relative du corps de fiche 16 dans le corps d'embase 2. Les canons 35 des embouts 23 viennent alors en regard l'un de l'autre, et sont chacun appliqué par l'un des clips élastiques 10 contre l'équerre 7, les talons 13 des extrémités rabattues 12 agissant dans les deux directions perpendiculaires à l'axe longitudinal du connecteur. Le jeu de montage du corps de fiche 16 dans le corps d'embase 2 étant inférieur au jeu de montage de l'embout 23 dans le corps de fiche 16, les canons 35 viennent ainsi exactement en bout l'un de l'autre et, par vissage des écrous de connection 15 sur les filetages 5 de l'embase 1, les canons 35 sont appliqués l'un contre l'autre avec une pression suffisante pour assurer une bonne transmission entre les extrémités des fibres 21, le recul élastique des embouts 23 dans le corps de fiche 16 évitant les surpressions de contact, qui seraient dommageables pour les fibres 21.

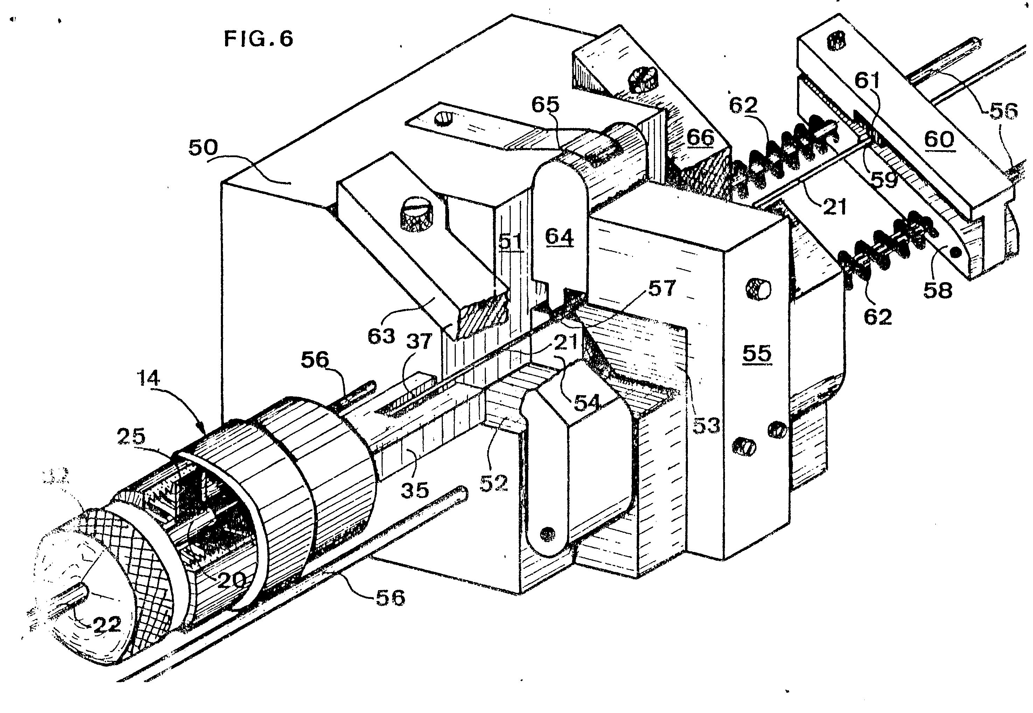

En référence à la figure 6, le dispositif particulier destiné à permettre le montage d'une fibre optique 21 sur le canon 35 d'un embout reçu dans une fiche 14 du connecteur décrit en référence aux figures 1 à 5, est constitué d'un bloc 50, dans lequel ont été rectifiés deux plans 51 et 52 perpendiculaires l'un à l'autre, constituant une équerre contre laquelle une cale de centrage 53 applique un élément de centrage 54, la cale 53 étant elle-même maintenue sur le bloc 50 par le support 55 que l'on peut solidariser à ce dernier. Le bloc 50 est traversé par deux barres de guidage 56, parallèles à l'arête de l'équerre, et sur lesquelles on peut disposer une fiche 14 sur laquelle l'écrou serre-câble 32 retient le câble 22, entourant la gaine 20, retenue par le presse-étoupe 25, de la fibre 21, qui sort du canon 35 de l'embout reçu dans la fiche 14, traverse une rainure en V 57 pratiquée sur l'élément de centrage 54, et se trouve retenue sur la base 58 d'un élément porte-fibre, présentant une rainure en V 59, dans le prolongement de la rainure 57, par un doigt 60, basculant sur la base 58, et muni d'un tampon 61 serrant la fibre 21 contre la base 58 lorsque le doigt 60 est solidarisé à la base 58, laquelle est montée coulissante sur les deux barres de guidage 56, et se trouve élastiquement écartée du bloc 50 par deux ressorts 62 montés sur les barres de guidage 56 et s'appuyant contre le bloc 50. Ces ressorts 62 constituent des moyens élastiques tendant à tirer la fibre 21 hors du canon 35. La fiche 14 ayant été déplacée vers le bloc 50 sur les barres 56, jusqu'à ce que l'extrémité du canon 35, ayant glissé sur le plan rectifié 52, soit en contact du côté de l'élément de centrage 54, le bras 63, monté basculant sur le bloc 50, est alors solidarisé au bloc 50 pour appliquer le canon 35 contre les plans rectifiés 51 et 52 et lui donner une position convenable contre l'équerre, au contact de l'élément de centrage 54. La fibre 21 étant maintenue au fond de la rainure 57 par une aiguille de pression 64, montée coulissante sur le bloc 50, entre ce dernier et le support 55, et sollicitée élastiquement par le ressort à lame 65 vers l'élément de centrage 54, on peut alors procéder au collage de de la fibre 21 sur le canon 35 en introduisant une goutte de colle dans la fente 37 pratiquée à l'extrémité du canon 35. Après séchage, on peut relâcher la fibre 21 du porte fibre et retirer la fiche 14 pour couper la fibre 21 au droit de l'extrémité du canon 35. Sur la figure 6, on a représenté le

11

canon 35 d'un embout venant s'appliquer contre la face gauche de l'élément de centrage 54, mais on peut monter la fiche 14 sur les barres de guidage 56 de façon à ce que le canon 35 vienne s'appliquer contre la face droite de l'élément de centrage 54, les ressorts 62 et la base 58 du porte-fibre étant alors montés sur les barres 56 à gauche de l'élément de centrage 54, et le canon 35 étant positionné par le bras basculant 66 symétrique du bras 63 par rapport à l'élément de centrage 54. De la sorte, on peut obtenir deux familles d'embouts que l'on peut qualifier de "gauches" et de "droits", identiques entre-eux à 0,01 mm près, symétriques d'une famille à l'autre par rapport aux plans de référence, et identiques dans une famille à 1 micron près, après collage de la fibre.

Pour discriminer les embouts "gauches" des embouts "droits", on prévoira avantageusement des corps de fiche "gauches" et des corps de fiche "droits", se différenciant les uns des autres par la position des clavettes 42 dans les rainures 6, qui peuvent être multiples, respectivement sur les corps de fiche et sur le corps d'embase, de façon à assurer un détrompage. Par exemple, chaque extrémité tubulaire du corps d'embase peut présenter trois rainures 6 à 120°, deux d'entre-elles, à l'extrémité "gauche", recevant deux clavettes 42 d'un corps de fiche "gauche", alors que deux rainures de l'extrémité "droite", dont une n'est pas située dans le prolongement des deux rainures 6 occupées de l'extrémité "gauche", reçoivent deux clavettes 42 d'un corps de fiche droit.

Le dispositif de montage de fibres sur des embouts, conforme à la présente invention, permet l'utilisa-

12

tion de connecteurs selon l'invention, de mise en oeuvre aisée et de structure simple, chaque fois que devront être réalisées des connexions fibres à fibres.

13

REVENDICATIONS

1/ Connecteur pour fibres optiques, comprenant une embase (1) de part et d'autre de laquelle sont susceptibles de se solidariser deux fiches (14) portant chacune l'une des extrémités de fibres optiques (21) à connecter, caractérisé en ce que l'embase (1) présente un corps d'embase (2) de forme générale tubulaire, à l'intérieur duquel est retenue une équerre (7), et en ce que chaque fiche (14) comprend un embout (23) muni d'un canon (35) de section carrée ou rectangulaire à bords chanfreinés, présentant un perçage longitudinal (36), les canons (35) étant, à l'assemblage des fiches (14) sur l'embase (1), positionnés chacun contre l'équerre (7) et venant en regard l'un de l'autre, de sorte que les extrémités des fibres optiques (21), retenues chacune par collage dans une fente (37) pratiquée à l'extrémité de chaque canon (35) et débouchant dans le perçage longitudinal (36), viennent en bout l'une de l'autre.

2/ Connecteur selon la revendication 1, caractérisé en ce que chacun des canons (35) est appliqué, indépendamment de l'autre, contre l'équerre (7) par des moyens élastiques retenus dans le corps d'embase (2).

3/ Connecteur selon la revendication 2, caractérisé en ce que ces moyens élastiques consistent en deux clips élastiques (10) entourant l'équerre (7), et présentant des extrémités recourbées (12), rabattues vers l'intérieur de l'équerre (7) pour repousser, chacun, l'un des canons (35) contre l'équerre (7).

4/ Connecteur selon l'une des revendications 1 à 3, caractérisé en ce que chaque canon (35) est porté

14

par une base d'embout (34), creuse, traversée par la fibre (21) sortant du perçage longitudinal (36) du canon (35), et par laquelle l'embout (23) est reçu dans un corps de fiche (16) dans lequel il est susceptible de se déplacer axialement à l'encontre de moyens élastiques prenant appui contre des moyens de retenue d'une gaine (20), entourant la fibre optique (21), et d'un câble (22) de protection mécanique de la gaine (20), ces moyens de retenue étant fixés dans le corps de fiche (16) par un écrou serre-câble (32) vissé sur le corps de fiche (16), à l'une de ses extrémités, l'autre extrémité étant traversée par le canon (35) de l'embout (23).

5/ Connecteur selon la revendication 4, caractérisé en ce que les moyens de retenue de la gaine (20) et du câble (22) comprennent un presse-étoupe (25), disposé entre deux rondelles (27,28), et présentant un perçage central (26) dans lequel est retenue la gaine (20), les moyens élastiques, à l'encontre desquels l'embout (35) peut se déplacer, prenant appui contre l'une des rondelles (28), positionnée contre un épaulement interne (29) du corps de fiche (16), et une ferrule (30) sertie sur le câble (22) étant retenue contre l'autre rondelle (27) par l'écrou serre-câble (32) vissé sur le corps de fiche (16).

6/ Connecteur selon l'une des revendications 4 et 5, caractérisé en ce qu'il comprend un limiteur de course (39) pour limiter les déplacements axiaux de l'embout (23) dans le corps de fiche (16).

7/ Connecteur selon l'une des revendications 4 à 6, caractérisé en ce que chaque corps de fiche (16) est susceptible d'être positionné, par sa partie (19) recevant la base (34) de l'embout (23), dans l'une des extrémités du corps d'embase tubulaire (2), au moyen d'éléments mécaniques (6,41,42) empêchant toute rotation du corps de fiche (16) par rapport au corps d'embase (2), ces derniers étant solidarisés l'un à l'autre par un écrou de connection (15), et montés de telle sorte que le jeu entre le corps de fiche (16) et le corps d'embase (2) soit inférieur au jeu entre l'embout (23) et le corps de fiche (16).

8/ Dispositif de montage d'une fibre optique (21) sur un embout (23) reçu dans une fiche (14) de connecteur selon l'une des revendications 1 à 7, caractérisé en ce qu'il comprend un bloc (50) sur lequel ont été rectifiés deux plans perpendiculaires (51, 52) constituant une équerre contre laquelle est appliqué un élément de centrage (54), dont une face, non au contact de l'équerre, présente une rainure en V (57), parallèle à l'arête de l'équerre, et au fond de laquelle est maintenue une fibre optique (21), sortant du canon (35) de l'embout (23) et soumise à l'effet de moyens élastiques tendant à tirer la fibre (21) hors du canon (35), lequel est appliqué contre l'équerre et contre l'un des côtés de l'élément de centrage (54), de sorte que par introduction de colle (48) dans la fente d'extrémité (37) du canon (35), l'extrémité de la fibre (21) est immobilisée en bout du canon (35), dans une position identique pour tous les canons (35) appliqués contre l'élément de centrage (54) d'un même côté de ce dernier.

9/ Dispositif selon la revendication 8, caractérisé en ce qu'une aiguille de pression (64), montée coulissante sur le bloc (50) et sollicitée élastiquement en direction de la rainure en V (57) de l'élément de centrage (54), lui-même appliqué contre

16

l'équerre par une cale (53), maintient la fibre (21) au fond de cette rainure en V (57), et en ce que le canon (35) de l'embout (23), positionné contre l'un des côtés de l'élément de centrage (54), est appliqué contre l'équerre par celui de deux bras (63,66), montés basculants sur le bloc (50) de part et d'autre de l'élément de centrage (54), qui se trouve du même côté de ce dernier que le canon (35).

10/ Dispositif selon la revendication 9, caractérisé en ce que le bloc (50) est traversé par deux barres de guidage (56) parallèles à l'arête de l'équerre et supportant, d'un côté du bloc (50), la fiche (14) recevant l'embout (23) considéré, et, de l'autre côté du bloc (50), un porte-fibre, constitué d'une base (58) présentant une rainure en V (59), dans le prolongement de celle (57) de l'élément de centrage (54), sur laquelle peut se rabattre un doigt de blocage (60) de la fibre (21) contre la base (58), laquelle, montée coulissante sur les guides (56), est élastiquement écartée du bloc (50) par deux ressorts (62), montés sur les guides (56) et s'appuyant contre le bloc (50), et constituant les moyens élastiques tendant à tirer la fibre (21) hors du canon (35).

FIG.1

1/5

0010505

FIG. 2

FIG.3

FIG.5

42

38

2

21

35

36

19

FIG.4

4

3

10

12

13

12

35

21

2

48

9

7

8

FIG.6

# RAPPORT DE RECHERCHE EUROPEENNE

Numéro de la demande

0010505

EP 79 40 0775

## DOCUMENTS CONSIDERES COMME PERTINENTS

| Catégorie | Citation du document avec indication, en cas de besoin, des parties pertinentes | Revendication concernee |
|---|---|---|
| A | <u>GB - A - 1 526 260</u> (S.T.C.) <br> * Page 2, lignes 3-48; figures 1-3 * | 1 |
| | -- | |
| A | <u>DE - A - 2 456 151</u> (SIEMENS) <br> * Page 3, lignes 4-13 et 18-22; revendications 1,2,6 * | 1 |
| | ---- | |

### CLASSEMENT DE LA DEMANDE (Int. Cl. 3)

G 02 B 7/26

### DOMAINES TECHNIQUES RECHERCHES (Int. Cl. 3)

G 02 B 7/26

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 25-01-1980 | PFAHLER |